# EUROPEAN PATENT APPLICATION

(11) **EP 1 378 882 A1**
(43) Date of publication of application: **07.01.2004**
(21) Application number: 02703938.7
(22) Date of filing: 08.03.2002
(51) Int. Cl.: G09G 1/00, G09G 1/28, H04N 7/18, H01J 29/30, H01J 31/12

(54) **CATHODE-RAY TUBE**

(30) Priority: 12.03.2001 JP 2001068388
(71) Applicant: Sony Corporation, Tokyo 141-0001 (JP)
(72) Inventor: SASAKI, Ken, c/o Sony Corporation, Tokyo 141-0001 (JP)
(74) Representative: Thévenet, Jean-Bruno
(86) International application number: PCT/JP2002/002162
(87) International publication number: WO 2002/073580

(57) **Abstract**

In a cathode ray tube capable of displaying a video image in monotone and also, in part, a video image in color by a phosphor pattern having a predetermined shape by an AC reproduction method, only a desired phosphor pattern can be made emit light excellently. At the time of displaying an icon video image in an icon display area, an icon blanking signal (S3) is generated and the level of a signal portion corresponding to phosphor patterns other than the desired phosphor pattern in a video signal is lowered to be below the black level. Consequently, while employing the AC reproduction method, an unnatural operation such that the phosphor patterns other than the desired phosphor pattern emit light dimly is suppressed, and only the desired phosphor pattern can be made emit light excellently.

## Description

### Technical Field

The present invention relates to a cathode ray tube of a monochrome display method and, particularly, to a cathode ray tube enabling an icon-shape image to be displayed in color in part in the monochrome display method.

### Background Art

Hitherto, a cathode ray tube (CRT) is widely used in a television receiver, various monitors, and the like. In the CRT, an electron beam is emitted from an electron gun provided in the tube (cathode ray tube) toward a phosphor screen to form a scan screen according to scan with the electron beam on a tube face. The types of the cathode ray tube are broadly divided into a straight type and a flat type. A cathode ray tube of the straight type has a structure such that an electron gun is disposed so that an emission port of an electron beam faces a phosphor screen and the center of the phosphor screen is irradiated with an electron beam almost perpendicularly. On the other hand, the cathode ray tube of the flat type has a structure such that an electron gun and a phosphor screen are provided on almost the same plane and the phosphor screen is obliquely irradiated with an electron beam. Since the cathode ray tube of the flat type can be made thinner as compared with the cathode ray tube of the straight type, the cathode ray tube of the flat type is often used for a relatively small device such as a monitor portion of a master device in a door phone apparatus, a portable-type TV (television) monitor, and the like.

Although there is a cathode ray tube for displaying an image in a whole screen in color, a cathode ray tube for simply displaying a video image in monochrome is also in demand and is being developed. Particularly, a flat-type cathode ray tube of a monochrome display method is often used for a door phone apparatus. In a cathode ray tube of the monochrome display method, a whole phosphor screen is formed by, for example, a white light emission phosphor and, by scanning the phosphor screen with a single electron beam, thereby a monochromatic image is displayed.

Also in an apparatus using the cathode ray tube of the monochrome display method, there is a request to display a video image in color in part. For example, a door phone apparatus is combined with various sensors such as a fire detector and a gas leak detector and the combined-door phone apparatus comprises a security system. In the case of such a system configuration, from the viewpoint of calling the user's attention, it is desirable to display a warning by expressing occurrence of an abnormal event in a color (for example, red) different from regular monochrome display on the master device side.

Hitherto, to perform color display on the door phone apparatus using the flat-type cathode ray tube of the monochrome display method, a device for color display has to be separately provided. A device for color display has, for example, a structure such that the back face of a transparent substrate on which a pattern of a character, a figure, or the like is printed in color is irradiated with light of a lamp of a predetermined color (such as white or red) to make the part printed in color emit light. In such color display, a display state of a video image is monotonous. Particularly, in the case of using the color display for displaying a warning, a problem of poor effect of warning arises. In addition, a device for color display has to be separately provided, so that a problem of increase in the size of the apparatus as a whole and in cost occur. Further, there is also a problem that flexibility of designing of the whole apparatus is limited.

The applicant herein therefore has proposed inventions enabling color display to be performed in part in a cathode ray tube of a monochrome display method in Japanese Patent Application Nos. 2000-045114 and 2000-117594, and the like.

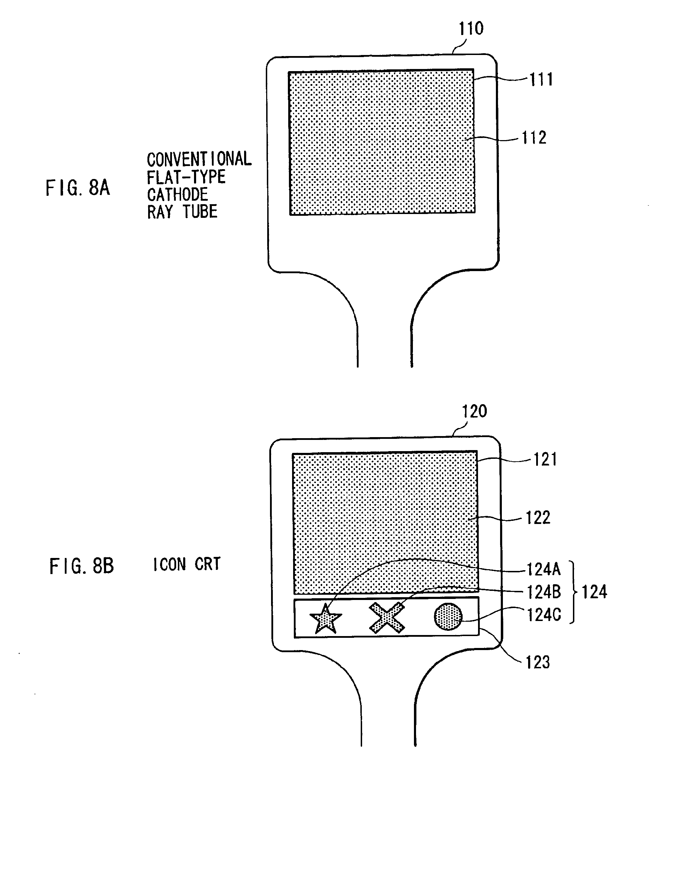

Referring to Figs. 8A and 8B, the invention proposed in the past by the applicant of the present invention will be briefly described. In Figs. 8A and 8B, the video image display part in the flat-type cathode ray tube is shown schematically. In a conventional flat-type cathode ray tube 110 of a monochrome display method, as shown in Fig. 8A, the whole of a video image display area 111 is formed by a monochromatic phosphor (for example, white light emission phosphor) 112.

On the other hand, a flat-type cathode ray tube 120 according to the invention of the applicant herein has, as shown in Fig. 8B, a monochromatic phosphor 122. Not only a first video image display area 121 in which a normal monochromatic video image is displayed but also a second video image display area 123 for color display are provided. In the second video image display area 123, another phosphor 124 which emits light in color different from the color of the phosphor 122 provided in the first video image display area 121 is provided. The phosphor 124 is preliminarily formed in patterns of imitations of video images to be displayed. The phosphor 124 is formed in a single color (for example, red) or a plurality of colors in accordance with a video image to be displayed. With the configuration, when the second video image display area 123 is scanned with an electron beam, the phosphor pattern portion emits light, thereby displaying a color image in an icon shape. By forming a plurality of phosphor patterns (icon patterns) 124A, 124B, and 124C in the second video image display area 123, a plurality of icon video images can be displayed simultaneously or individually.

As described above, the cathode ray tube according to the invention of the applicant herein displays not only a monochromatic video image in normal display but also a video image of an icon shape in color. In the following, the cathode ray tube with the function of displaying an icon will be simply called an "icon CRT".

The outline of a TV door phone apparatus in which the flat-type cathode ray tube is used will be described. The TV door phone apparatus is a generic name of an apparatus generally having a slave device mounted outdoor and a master device mounted indoor and capable of transmitting/receiving sound and a video image to/from the slave device via a communication cable. A video camera is assembled in the slave device and a monitor for displaying a video image captured by the video camera of the slave device is assembled in the master device. The flat-type cathode ray tube is used for the monitor portion of the master device. In the slave device, an infrared ray lamp (generally, infrared ray LED (light emitting diode)) for irradiating a caller as an object of which image is captured is also assembled. In the TV door phone apparatus, an image of the caller is captured by the video camera assembled in the slave device and an image signal is transferred to the master device via the communication cable. A user in the house recognizes that a caller came from a video image displayed on the monitor portion of the master device and can recognize who the caller is.

In the TV door phone apparatus, at the time of capturing an image by the slave device side, the caller is irradiated with an infrared ray from the infrared ray lamp assembled in the slave device. The reason why the caller is irradiated with light is to facilitate recognition of the caller even in the night or in dark circumstances. The infrared ray is used as illumination light for the reason that it is proper to use light in a wavelength range which is not sensed by human eyes so that the caller does not recognize being irradiated with light (so that the caller does not feel dazzling).

Generally, the flat-type cathode ray tube used for a TV door phone apparatus often displays a video image by a method called an AC (alternate current) reproduction method due to its use conditions. On the other hand, in a general television or display, a DC (direct current) reproduction method is often employed.

The reason why the AC reproduction method is often employed in the TV door phone apparatus will now be described.

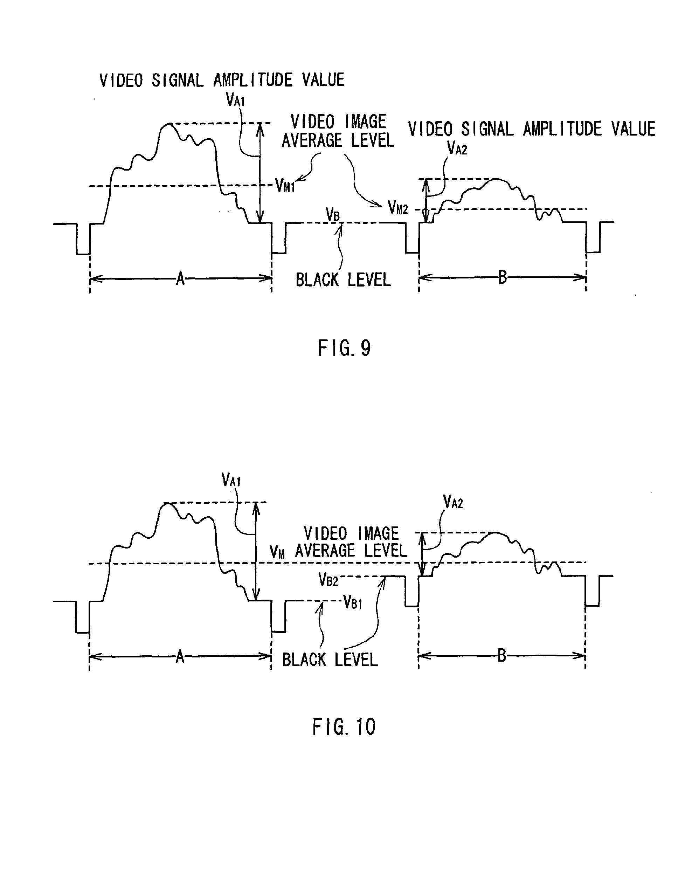

First, the DC reproduction method will be described by referring to Fig. 9. The DC reproduction method is a method for improving contrast and preventing black level drift caused by fluctuations in the black level. According to the method, by clamping a video signal at a certain level, the black level is prevented from fluctuating. Generally, in the case of a light video image, an amplitude value V_{A1} of a video signal is large as shown in an interval A in Fig. 9. In the case of a dark video image, an amplitude value V_{A2} is small as shown in an interval B in Fig. 9. In the DC reproduction method, when video images of different signal levels as shown in FIG. 9 are input, the video signals are clamped, so that the black level is maintained at an almost constant value V_{B} and does not fluctuate. According to the signal level, average levels V_{M1} and V_{M2} fluctuate.

The AC reproduction method will now be described by referring to Fig. 10. Also in the AC reproduction method, like the DC reproduction method, the amplitude value V_{A1} of a video signal is large in a light video image (interval A in Fig. 10) and the amplitude value V_{A2} of the video signal is small in a dark video image (interval B in Fig. 10). However, in the AC reproduction method, different from the DC reproduction method, the average value of the whole video signal, not the value of the black level, is fixed to a direct current level V_{M}. Consequently, the value of the black level fluctuates according to the video signal. Particularly, in a dark video image, a value V_{B2} of the black level increases more than a value V_{B1} in a light video image, resulting in a so-called black level drift state.

In a monitor used for a system such as the TV door phone apparatus, although an infrared ray is emitted from the infrared ray lamp, the luminous amount is not so sufficient. Therefore, when the DC reproduction method is employed for the monitor, a problem occurs such that since a dark video image portion exists near the black level of the video signal, it is not easy for the user in the house to recognize what is displayed on the monitor. On the other hand, in the AC reproduction method, in the case where the video amplitude value is small, that is, in the case where a dark scene is displayed, the black level rises, so that it becomes easier to recognize what is displayed as a whole video image. Consequently, the AC reproduction method is often employed as a circuit configuration of a monitor used for a system such as the TV door phone apparatus.

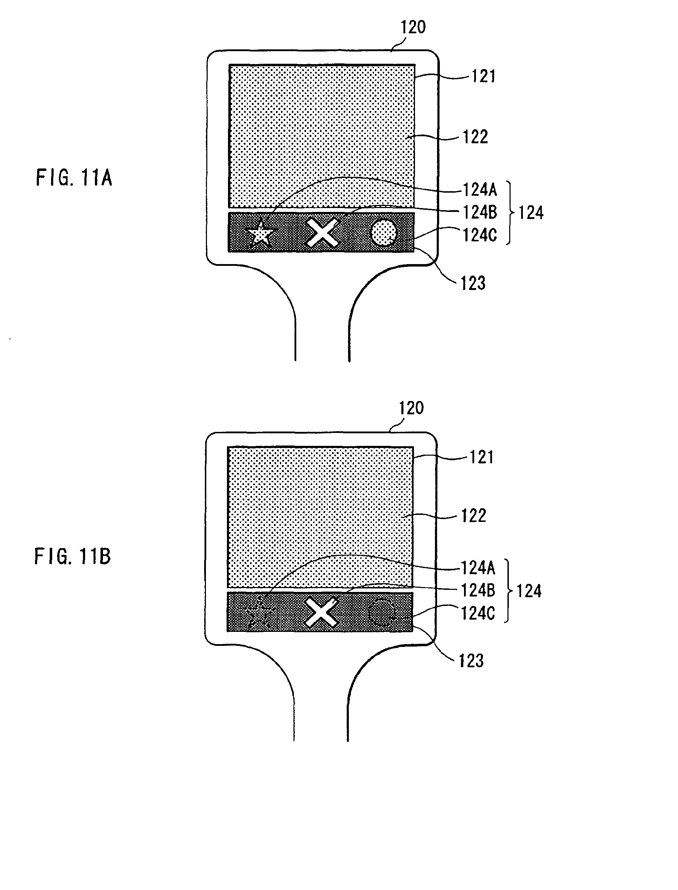

Referring now to Figs. 11A and 11B, the case of employing the AC reproduction method for the icon CRT will be considered. Specifically, the case where only the center icon pattern 124B in the three icon patterns 124A, 124B, and 124C is made emit light will be considered. In this case, ideally, as shown in Figs. 11B, it is desirable to set the video signals to the black level or lower in the area other than the icon pattern 124B so that the other icon patterns 124A and 124C do not emit light.

In reality, however, when the conventional AC reproduction method is employed for the icon CRT, there is a case such that a display state shown in Fig. 11A is obtained. In the AC reproduction method, as described above, the value of the black level fluctuates according to the video signal. Consequently, in particular, in a state where a dark video image is captured by the video camera, the value of the black level increases. At the time of making only the icon pattern 124B in the center emit light, the other area enters a black level drift state, and there is the possibility that the other icon patterns 124A and 124C emit light dimly. In such a state, a problem occurs such that the user in the house has to inherently recognize only the icon pattern 124B but erroneously recognizes the other icon patterns 124A and 124C.

In short, the conventional technique has the following problems with respect to the icon CRT. First, when the DC reproduction method is employed for the icon CRT, the black level is maintained constant. Consequently, at the time of making an icon emit light, icons other than the icon to emit light do not emit light irrespective of brightness of a video image and there is no problem of erroneous recognition of an icon. However, on the other hand, particularly in the case where the DC reproduction method is applied to a door phone apparatus, there is a problem such that it is difficult to recognize the face of a caller in the night or in dark circumferences.

In contrast, according to the AC reproduction method, black level drift occurs in an image of the face of a caller in the night or in dark circumferences, so that the method is optimum to identify the caller. However, when the conventional AC reproduction method is applied as it is to the icon CRT, depending on conditions of a video signal, an icon which is not desired to emit light emits light weakly as shown in Fig. 11A. It is bothering for the user in the house or, in some cases, it causes a problem that the user erroneously recognizes the icon.

The invention has been achieved in consideration of the problems and its object is to provide a cathode ray tube capable of displaying a monochromatic image and also a color video image of a phosphor pattern in a predetermined shape in part by an AC reproduction method, wherein only a desired phosphor pattern can be made emit light excellently.

### Disclosure of the Invention

According to the invention, a cathode ray tube for displaying a main video image in monotone by an AC reproduction method, includes: an electron gun for emitting an electron beam; a first video image display portion having a phosphor which emits light in monotone according to scan with an electron beam, and displaying a main video image by light emission of the phosphor; and a second video image display portion in which phosphor patterns each having a predetermined shape are provided in a plurality of positions in an area different from the area where the phosphor is provided, and at least one video image different from the main video image is displayed by light emission of the phosphor pattern in a color different from that of the main video image. The cathode ray tube according to the invention also includes: first signal generating means for generating a display signal for making a desired phosphor pattern among the phosphor patterns provided in the plurality of positions emit light; and second signal generating means for generating a blanking signal for decreasing a level of a signal portion to be below the black level, the signal portion corresponding to a phosphor pattern other than the desired phosphor pattern in the display signal.

In the invention, the phosphor provided in the first video image display portion is a white light emission phosphor for emitting, for example, white light. The white light emission phosphor includes a phosphor which emits light in white alone and also a phosphor which emits light apparently in white by mixing, for example, a blue light emission phosphor and a yellow light emission phosphor at a proper ratio. In the invention, a single color includes not only a color having a single light wavelength region but also a color having a plurality of wavelength regions mixed and recognized as a single color by human eyes.

In the cathode ray tube according to the invention, in the first video image display portion, a main video image is displayed in monochrome. In the second video image display portion, by light emission of a phosphor pattern of a predetermined shape, at least one of other video images is displayed in a color different from that of the main video image. At the time of displaying another video image in the second video image display portion, a display signal for making a desired phosphor pattern emit light is generated by the first signal generating means. At this time, the blanking signal is generated by the second signal generating means and a level of a signal portion corresponding to a phosphor pattern different from the desired phosphor pattern in a display signal is decreased to be below the black level. It suppresses light emission of the phosphor patterns other than the desired phosphor pattern, and only the desired phosphor pattern emits light excellently.

Preferably, the second signal generating means generates, for example, the blanking signal by inverting the polarity of the display signal. It facilitates generation of the blanking signal.

Other and further objects, features, and advantages of the invention will appear more fully from the following description.

### Brief Description of the Drawings

Fig. 1 is a configuration diagram showing a whole configuration of a door phone apparatus having a flat-type cathode ray tube according to an embodiment of the invention.
Fig. 2 is a cross section showing a main portion of the internal structure of a master device in the door phone apparatus illustrated in Fig. 1.
Fig. 3 is a front view showing a state where the flat-type cathode ray tube shown in Fig. 2 is seen from the front face (front panel side).
Fig. 4 is a block diagram showing an example of the configuration of a circuit system of the flat-type cathode ray tube according to the embodiment of the invention.
Fig. 5 is a circuit diagram showing a more concrete configuration example of the circuit system.
Fig. 6 is a waveform chart showing an example of waveform of an icon display signal S2 and an example of waveform of an icon blanking signal S3.
Figs. 7A and 7B are waveform charts showing a state of a final video image signal. Fig. 7A shows the case where the icon blanking signal is not used and Fig. 7B shows the case where the icon blanking signal is used.
Figs. 8A and 8B are explanatory diagrams showing a display method of the cathode ray tube. Fig. 8A shows a conventional flat-type cathode ray tube capable of displaying only a monochromatic image and Fig. 8B shows a flat-type cathode ray tube of the monochrome display method capable of displaying a color image in part.
Fig. 9 is a diagram for explaining a DC reproduction method, in which an interval A indicates a state of a video signal in the case where a video image is relatively light and an interval B expresses a state of a video signal in the case where a video image is relatively dark.
Fig. 10 is a diagram for explaining an AC reproduction method, in which an interval A indicates a state of a video signal in the case where a video image is relatively light and an interval B expresses a state of a video signal in the case where a video image is relatively dark.
Figs. 11A and 11B are diagrams for explaining problems in the case where the AC reproduction method is employed for an icon CRT. Fig. 11A shows a display state of icons in the case of employing the conventional AC reproduction method and Fig. 11B shows an ideal display state.

### Best Mode for carrying out the Invention

Embodiments of the invention will be described in detail hereinbelow with reference to the drawings.

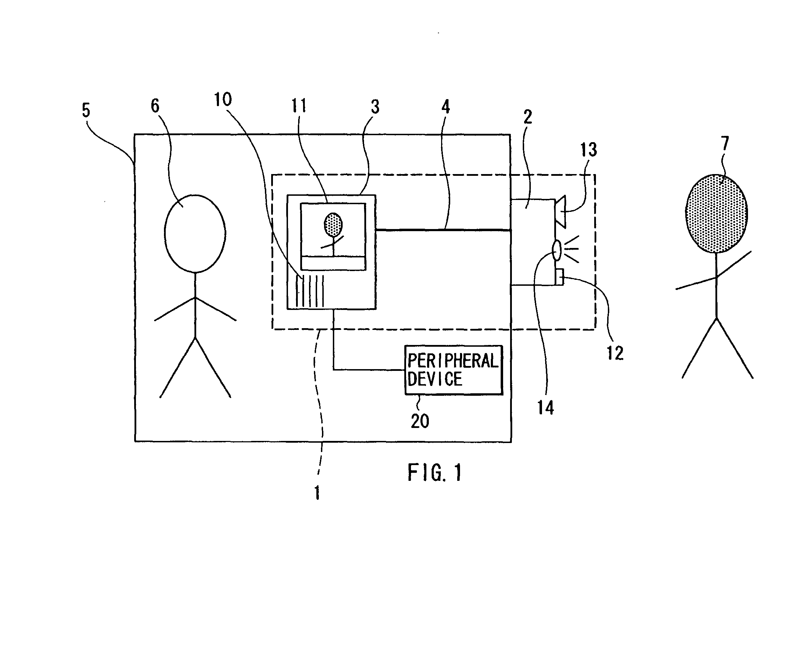

In the embodiment, an example of the case where a cathode ray tube of the invention is applied to a TV door phone apparatus 1 (in Fig. 1, hereinbelow, also simply called a door phone apparatus) will be described. The TV door phone apparatus 1 has a slave device 2 mounted outside (outdoor) of a house 5, a master device 3 mounted inside (indoor) of the house 5, and a communication cable 4 for mutually connecting the slave device 2 and the master device 3. The door phone apparatus 1 is connected to a peripheral device 20 for security guard (such as a fire detector or a gas leak detector). The components as a whole construct a security system. When an abnormal state (such as a fire) is detected, the peripheral device 20 outputs a detection signal for notifying of the fact to the master device 3.

The slave device 2 has the function of transmitting/receiving source to/from the master device 3 via the communication cable 4 and also has the function of transmitting a video image to the master device 3. The slave device 2 has a call button 12, a video camera 13, and an infrared ray lamp 14. The video camera 13 has the function of capturing an image of a caller 7 on the outside of the house and sending the video image signal to the master device 3 via the communication cable 4. The infrared ray lamp 14 is constructed by an infrared ray LED or the like. At the time of capturing an image by the video camera 13, the infrared ray lamp 14 emits an infrared ray to the caller so that the user can easily recognize who is the caller even in the night or in dark circumstances. The call button 12 is to be operated by the caller 7. When the caller 7 presses the call button 12, the slave device 2 transmits a signal indicative of the press of the button to the master device 3 via the communication cable 4. When the call button 12 is depressed by the caller 7, the slave device 2 starts image capturing operation by the video camera 13.

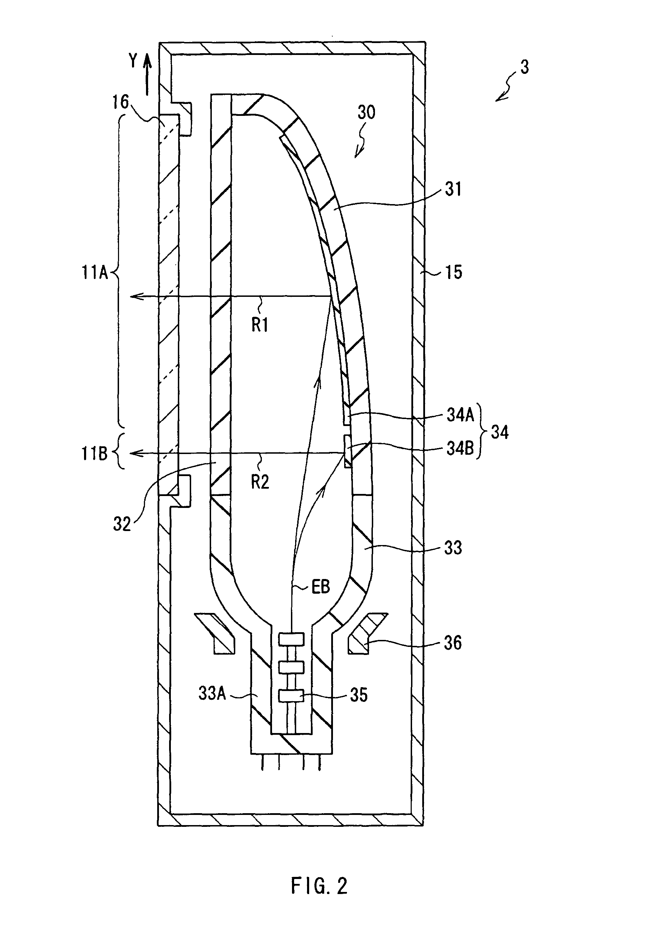

The master device 3 has the function of transmitting/receiving sound to/from the slave device 2 via the communication cable 4 and the function of receiving a video image from the slave device 2. The master device 3 has a monitor constructed by a flat-type cathode ray tube 30 (Fig. 2), and a video image display 11 is provided on its front face. The master device 3 also has a speaker 10. The video image display 11 is a part for displaying a video image and has the function of displaying a video image captured by the video camera 13 of the slave device 2 and a colored icon image. When a signal indicating that the call button 12 is depressed is received from the slave device 2, the master device 3 makes ringing sound by the speaker 10 to notify the user 6 in the house of the fact that the caller 7 came. At this time, the monitor is started to display a video image of the caller 7 captured by the video camera 13 on the video image display 11.

As shown in Fig. 2, the master device 3 has a casing 15 forming the appearance of an almost rectangular parallelepiped shape. In the casing 15, the flat-type cathode ray tube 30 is mounted. Fig. 2 shows, as an example of the flat-type cathode ray tube 30, a reflection-type cathode ray tube. The Y direction shown in Fig. 2 corresponds to the vertical direction of the screen in the video image display 11.

The flat-type cathode ray tube 30 has a screen panel 31, a front panel (display panel) 32, and a funnel 33. The screen panel 31, front panel 32, and funnel 33 are constructed by, for example, transparent glass members. By a three-body structure of the panels, a flat-shaped glass tube body (flat tube) is formed. In the rear end portion of the funnel 33, an elongated neck 33A in which an electron gun 35 is disposed is formed. Around the outer peripheral portion of the funnel 33 extended to the neck 33A, a deflection yoke 36 for deflecting an electron beam EB emitted from the electron gun 35 is disposed. The deflection yoke 36 includes, although not shown, a horizontal deflection coil for deflecting the electron beam EB in the horizontal direction and a vertical deflection coil for deflecting the electron beam EB in the vertical direction. In the casing 15, in a portion corresponding to the front panel 32 of the flat-type cathode ray tube 30, a protection member 16 for protecting the front panel 32 is provided. The protection member 16 is made of, for example, a transparent resin.

The electron gun 35 has a configuration in which, although not shown, a plurality of grid electrodes are disposed in the front portion of a hot cathode structure having a cathode (hot cathode). Each electrode accelerates the electron beam EB emitted from the cathode in the electron gun. The electron beam EB emitted from the electron gun 35 is deflected by the deflection yoke 36 and falls on a phosphor layer 34 formed on the screen panel 31.

The front panel 32 has a flat plate shape. On the other hand, the screen panel 31 has a shape curved in the vertical direction. On the inner wall side of the screen panel 31, that is, the face side facing the front panel 32, a phosphor screen is formed. On the inner wall face of the screen panel 31, although not shown, a conductive reflection film is formed by vapor-depositing, for example, aluminum (Al). On the inner wall face of the screen panel 31, further, a phosphor layer 34 is formed via a not-shown reflection film. The reflection film formed on the screen panel 31 has the function of reflecting light emission rays R1 and R2 generated by incidence of the electron beam EB in the phosphor layer 34 toward the front panel 32. In the flat-type cathode ray tube 30, an optical image generated by the rays reflected by the reflection film is observed from the front panel 32 side.

The phosphor layer 34 is constructed by a phosphor which emits light according to incidence of the electron beam EB. In a normal general monotone-type flat-type cathode ray tube, all of the phosphor layers 34 are formed by white light emitting phosphors. However, in the cathode ray tube 30, the phosphor screen has two areas and two different kinds of phosphors are provided in the areas. Specifically, the cathode ray tube 30 has a first phosphor layer 34A formed by a white light emitting phosphor and a second phosphor layer 34B formed by another phosphor which emits color different from the white light emitting phosphor.

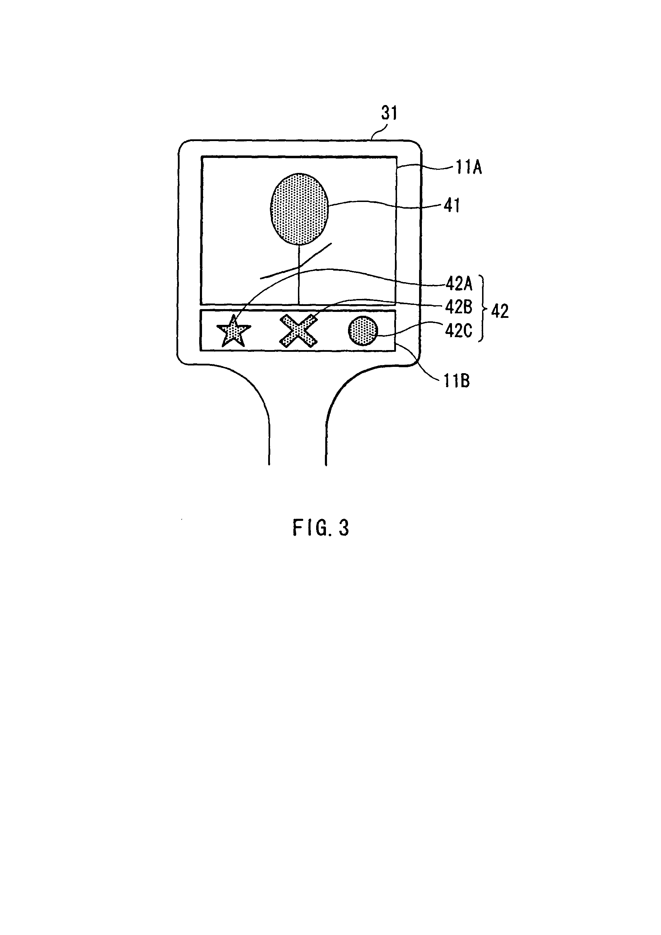

The first phosphor layer 34A is provided to display a video image in monotone, which is captured by the video camera 13 of the slave device 2 (Fig. 1). In the embodiment, a video image 41 captured by the video camera 13 is, as shown in Figs. 2 and 3, displayed in monotone in a main video image display area 11A by the light emission ray R1 generated when the first phosphor layer 34A is scanned with the electron beam EB. In the embodiment, the video image 41 captured by the video camera 13 of the slave device 2 and displayed in the main video image display area 11A will be also called a "main video image". The video image displayed in the main video image display area 11A is not limited to the video image captured by the video camera 13 of the slave device 2 but another video image may be displayed as a main video image. The main video image display area 11A including the first phosphor layer 34A corresponds to a concrete example of "a first video image display portion" in the invention.

On the other hand, the second phosphor layer 34B is provided to display another video image in color, which is different from the main video image displayed in the main video image display area 11A. As shown in the front view of Fig. 3, the second phosphor layer 34B is preliminarily formed in a pattern of the shape (the shape of an icon) equivalent to a video image to be displayed. A phosphor pattern (icon pattern) 42 is formed by a single color (for example, red) or a plurality of colors in accordance with an icon video image to be displayed. When the electron beam EB scans, the scanned phosphor pattern portion emits light, and an icon-shaped color video image is displayed in an icon display area 11B with the light emission ray R2. By forming a plurality of icon patterns 42A, 42B, and 42C as shown in the diagram in an area corresponding to the icon display area 11B, a plurality of icon video images can be displayed simultaneously or individually. As described above, in the embodiment, as another video image different from the main video image 41, a video image of a so-called icon shape is displayed in the icon display area 11B. The icon display area 11B including the second phosphor layer 34B corresponds to a concrete example of a "second video image display portion" in the invention.

Although the first phosphor layer 34A is uniformly provided in the whole area corresponding to the main video image display area 11A, the second phosphor layer 34B does not have to be provided in the whole area corresponding to the icon display area 11B but is, basically, provided partially only in an area in which the icon video image is desired to be displayed. In this case, it is sufficient to provide the structure of a so-called black matrix in which a black material (such as graphite) is deposited in a portion where the icon video image is not displayed (the portion in which the second phosphor layer 34B is not provided).

Although the icon patterns 42A, 42B, and 42C of the star shape, X-letter shape, and circular shape are shown in Fig. 3, the icon pattern 42 of an arbitrary shape such as a symbol, a letter, or any of various figures can be formed. In the case of using the icon display as an icon for warning at the time of emergency, it is desirable to form the icon pattern 42 in a form according to the warning. For example, if the peripheral device 20 (Fig. 1) has a fire detecting function, it is desirable to display a warning of fire by forming the icon pattern 42 in an icon shape (such as the shape of flames) by which the user can recognize occurrence of a fire at a glance. Further, it is desirable to give meaning of a warning not only to the shape but also to the color of the icon. For example, in the case of an icon indicating occurrence of a fire, it is preferable to display an icon in color indicative of flames (for example, red). To increase the effect of warning, a warning sound may be also generated with display of an icon.

A method of forming the first and second phosphor layers 34A and 34B will be briefly described. The first and second phosphor layers 34A and 34B can be formed by depositing a phosphor material on the inner wall face of the screen panel 31 by, for example, a printing method such as thermal transfer printing method or an electrodeposition method. The first and second phosphor layers 34A and 34B may be formed simultaneously by, for example, the printing method or may be formed in different processes. For example, it is also possible to form the first phosphor layer 34A by the electrodeposition method and, after that, form the second phosphor layer 34B separately by the printing method. Particularly, for the second phosphor layer 34B, for example, it is easy to apply a method of transferring a print portion of an icon in a print film in which the shape of an arbitrary icon is preliminarily printed onto the inner wall face of the screen panel 31 by the thermal transfer printing method. By applying such a method, for example, a special order may be made according to wish of the user of the door phone apparatus 1 and an arbitrary icon shape may be formed in the second phosphor layer 34B easily at low cost.

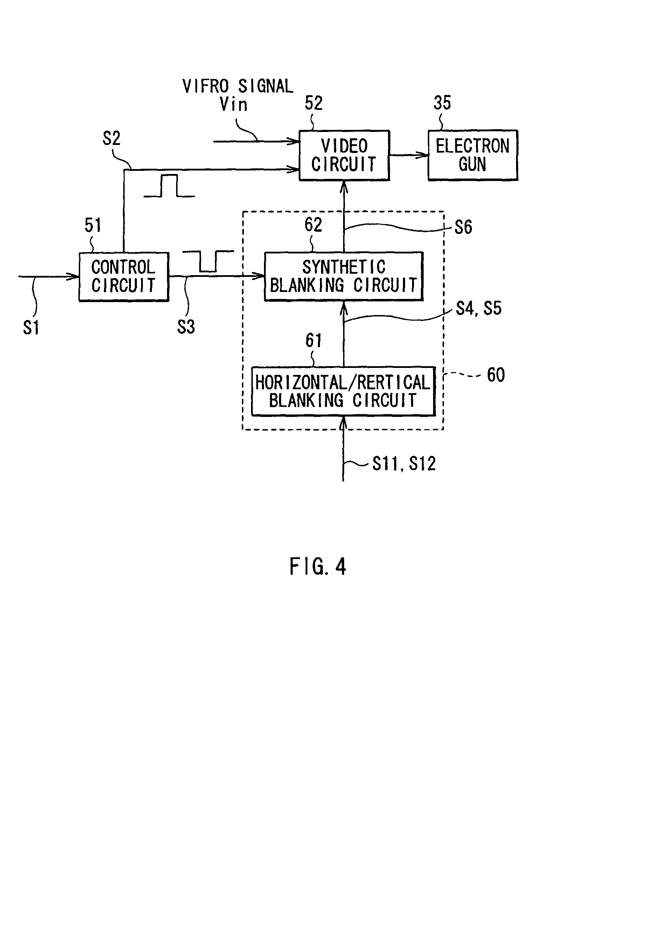

Referring to Fig. 4, the configuration of the circuit system of the cathode ray tube 30 will now be described. The cathode ray tube 30 has, as components of the circuit system, a control circuit 51, a video circuit 52, and a blanking circuit 60. The blanking circuit 60 has a horizontal/vertical blanking circuit 61 and a synthetic blanking circuit 62.

The control circuit 51 outputs an icon display signal S2 to the video circuit 52 in accordance with an icon control signal S1 instructing display of an icon video image and also outputs an icon blanking signal S3 to the synthetic blanking circuit 62. The icon control signal S1 is input from, for example, the peripheral device 20 (Fig. 1). The icon display signal S2 is a signal for making the icon pattern 42 emit light and is, as will be described hereinlater, a pulse signal according to the shape of the icon pattern 42 to be displayed. The icon blanking signal S3 is a signal for preventing the icon pattern 42 which is not desired from emitting light and is, as will be described hereinlater, generated by inverting the polarity of the icon display signal S2. The control circuit 51 corresponds to a concrete example of "first signal generating means" and "second signal generating means" in the invention. The icon display signal S2 corresponds to a concrete example of a "display signal" in the invention, and the icon blanking signal S3 corresponds to a concrete example of a "blanking signal" in the invention.

The horizontal/vertical blanking circuit 61 generates and outputs a horizontal blanking signal S4 and a vertical blanking signal S5 for blanking horizontal and vertical blanking periods, respectively, of a video image signal Vinon the basis of horizontal and vertical sync signals S11 and S12. The synthetic blanking circuit 62 generates a synthetic blanking signal S6 by combining the icon blanking signal S3 with the horizontal and vertical blanking signals S4 and S5 and outputs the synthetic blanking signal S6.

The video circuit 52 generates a video image signal to be applied to the electron gun 35 on the basis of the video image signal Vin from the video camera 13 of the slave device 2 (Fig. 1), the icon display signal S2, and the synthetic blanking signal S6.

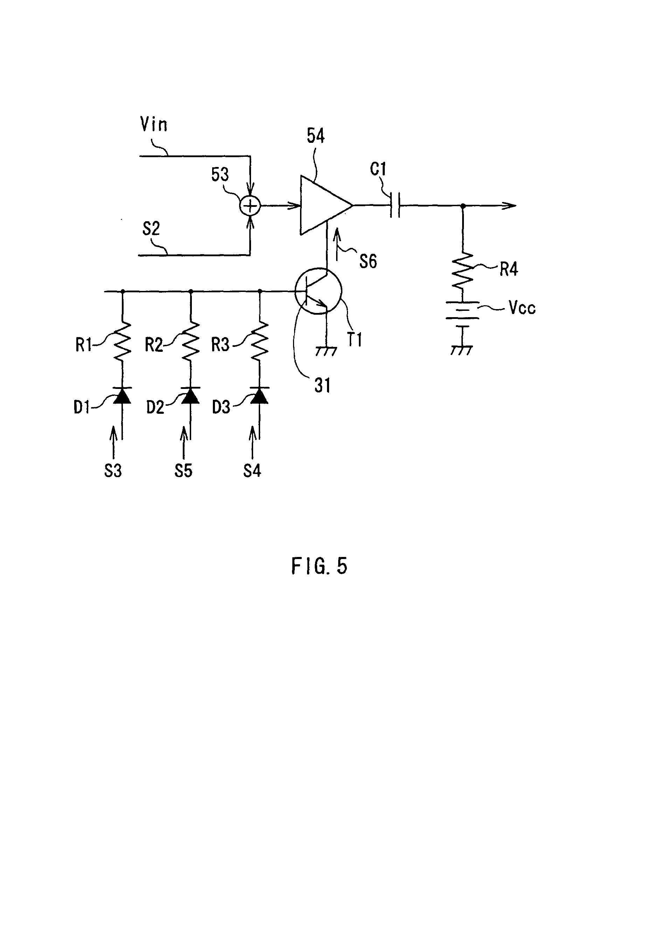

Referring now to Fig. 5, a more concrete circuit configuration of the cathode ray tube 30 will be described. A concrete example of the circuit portion of the video circuit 52 and the synthetic blanking circuit 62 will be mainly described. This circuit has a circuit configuration of the AC reproduction method. This circuit has an adding circuit 53 for adding the video signal Vin and the icon display signal S2 and outputting the resultant and a video amplifier 54 for amplifying an output signal from the adding circuit 53.

The circuit also has a transistor T1, resistors R1 to R3, and diodes D1 to D3. The emitter terminal of the transistor T1 is grounded and the collector terminal is connected to the video amplifier 54. One end of each of the resistors R1 to R3 is connected to the base terminal of the transistor T1. The diodes D1 to D3 are connected to the other ends of the resistors R1 to R3, respectively. To the base terminal of the transistor T1, the icon blanking signal S3 is input via the diode D1 and the resistor R1. To the base terminal of the transistor T1, the vertical blanking signal S5 is input via the diode D2 and the resistor R2 and the horizontal blanking signal S4 is input via the diode D3 and the resistor R3. The transistor T1 is turned on/off in accordance with the icon blanking signal S3 and the horizontal and vertical blanking signals S4 and S5 and outputs the synthetic blanking signal S6 from the collector terminal to the video amplifier 54. When the transistor T1 is turned on, that is, when a high-level signal is applied to the base electrode 31 of the transistor T1, the transistor T1 decreases the output of the video amplifier 54 to the GND (ground) level.

The circuit further has a capacitor C1 for eliminating direct current components of the video image signal output from the video amplifier 54 and a bias resistor R4 and a bias power source Vcc for applying a direct current bias component to the video signal from which the direct current components are eliminated. An output terminal of the video amplifier 54 is connected to the electron gun 35 via the capacitor C1. To a signal path between the capacitor C1 and the electron gun 35, one end of the bias resistor R4 is connected. The other end of the bias resistor R4 is connected to the bias power source Vcc. In the circuit of the AC reproduction method, as shown in Fig. 10, an average value of the whole video image signals is fixed to a predetermined direct current level V_{M}. In the circuit of Fig. 5, the voltage value determined by the bias resistor R4 and the bias power source Vcc becomes the average level V_{M}.

The operation of the door phone apparatus 1 having the above-described configuration will now be described.

First, referring to Fig. 1, the general operation of the door phone apparatus 1 will be described. In the TV door phone apparatus 1, when the call button 12 of the slave device 2 is depressed by the caller 7, a signal indicating that the button is depressed is transmitted to the master device 3 via the communication cable 4. At this time, the slave device 2 starts image capturing by the video camera 13 and transfers an image pickup signal to the master device 3 via the communication cable 4. The slave device 2 irradiates the caller with an infrared ray from the infrared ray lamp 14 at the time of image capturing. By emitting the infrared ray, even in the night or in the dark circumstances, the image capturing operation can be performed so that the caller is easily recognized.

On receipt of the signal indicative of depression of the call button 12 from the slave device 2, the master device 3 makes ringing sound from the speaker 10. At this time, a video image of the caller 7 captured by the video camera 13 is displayed in monotone as the main video image 41 in the main video image display area 11A (Fig. 3) of the video image display 11. The user 6 in the house recognizes the caller 7 by seeing the video image displayed on the video image display 11 (specifically, in the main video image display area 11A) and can also recognize who the caller is.

The master device 3 always monitors a monitor signal from the peripheral device 20 and, as necessary, displays an icon video image according to the kind of the monitor signal in color in the icon display area 11B of the video image display 11.

The control operation performed at the time of displaying the icon video image in the icon display area 11B will now be described in more detail.

In the circuit shown in Fig. 4, when the icon control signal S1 instructing display of an icon video image is received from the peripheral device 20 (Fig. 1), the control circuit 51 outputs the icon display signal S2 to the video circuit 52. The control circuit 51 outputs the icon blanking signal S3 to the synthetic blanking circuit 62.

The horizontal/vertical blanking circuit 61 generates the horizontal blanking signal S4 and the vertical blanking signal S5 on the basis of the horizontal and vertical sync signals S11 and S12 and outputs them to the synthetic blanking circuit 62. The synthetic blanking circuit 62 generates the synthetic blanking signal S6 by combining the icon blanking signal S3 with the horizontal and vertical blanking signals S4 and S5 and outputs the generated signal S6 to the video circuit 52.

The video circuit 52 generates a video image signal to be applied to the electron gun 35 on the basis of the video image signal Vin, the icon display signal S2, and the synthetic blanking signal S6 and outputs the video image signal. According to the applied video image signal, the electron gun 35 emits the electron beam EB. The electron beam EB emitted from the electron gun 35 is deflected by the deflection yoke 36 as shown in Fig. 2 and scans the inner wall face of the screen panel 31. The scanned icon pattern 42 emits light and the icon video image according to the shape of the icon pattern 42 is displayed in color in the icon display area 11B with the light emission ray R2.

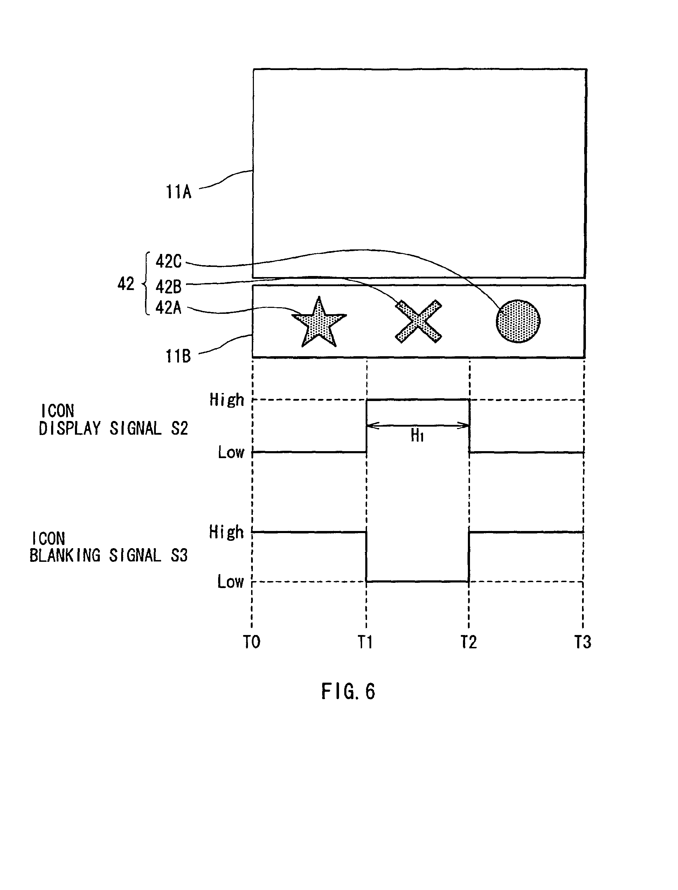

With reference to Fig. 6, the icon display signal S2 and the icon blanking signal S3 will now be described. Fig. 6 shows the signal waveform of the icon display signal S2 and the icon blanking signal S3 in about one horizontal scan period (1H period).

The control circuit 51 outputs a pulse signal having a pulse width corresponding to the area in which the icon pattern 42 to emit light is provided as the icon display signal S2. For example, in the case of making only the icon pattern 42B in the center emit light, as shown in Fig. 6, the control circuit 51 outputs a pulse signal (having a pulse width Hi) which becomes the high level only in the area where the icon pattern 42B is provided. Also in the case of displaying any of the icon patterns 42, the scan signal in the vertical direction becomes the high level in the area corresponding to the icon display area 11B. In this case, in the circuit of Fig. 5, a signal which becomes the high level in a period from time T1 to time T2 and becomes the low level in the other periods from time T0 to time T1 and from time T2 to time T3 is applied as the icon display signal S2 to the video amplifier 54. In Fig. 6, the pulse width Hi is slightly wider than the icon pattern 42B. However, in the icon display area 11B, the portion other than the area in which the icon pattern 42 is provided is made of a black substance. Therefore, even if the pulse width H₁ is wider a little (to an extent that the pulse width does not reach the neighboring icon patterns 42A and 42C), only a desired phosphor pattern can emit light.

The icon blanking signal S3 is a signal for preventing light emission of the icon pattern 42 which is intended to emit light, and functions so that the video image portion corresponding to the area other than the icon pattern 42 to emit light is blanked. In the circuit of Fig. 5, when the transistor T1 is turned on, that is, when a high-level signal is applied to the base electrode 31 of the transistor T1, the transistor T1 operates to decrease an output of the video amplifier 54 to the GND level. In other words, by applying the high-level signal to the base electrode 31 of the transistor T1, a scan line can be decreased to the black level or less. On the other hand, the icon blanking signal S3 is a signal for blanking the period in which the icon display signal S2 is at the low level in order to prevent black level drift. It is therefore sufficient to generate the icon blanking signal S3 by inverting the polarity of high or low level of the icon display signal S2.

Concretely, by inverting the polarity of the icon display signal S2 as shown in Fig. 6, the icon blanking signal S3 becomes the high level in the period from the time T0 to time T1 and the period from time T2 to time T3. In the periods, the transistor T1 is turned on, an output of the video amplifier 54 is decreased to the GND level, and the video image signal is blanked. In the period from time T1 to time T2, the icon blanking signal S3 becomes the low level, so that the transistor T1 is turned off, and the video amplifier 54 operates as a normal amplifier. Therefore, in the period from time T1 to time T2, the high-level icon display signal S2 is amplified and output, and only the icon pattern 42B emits light.

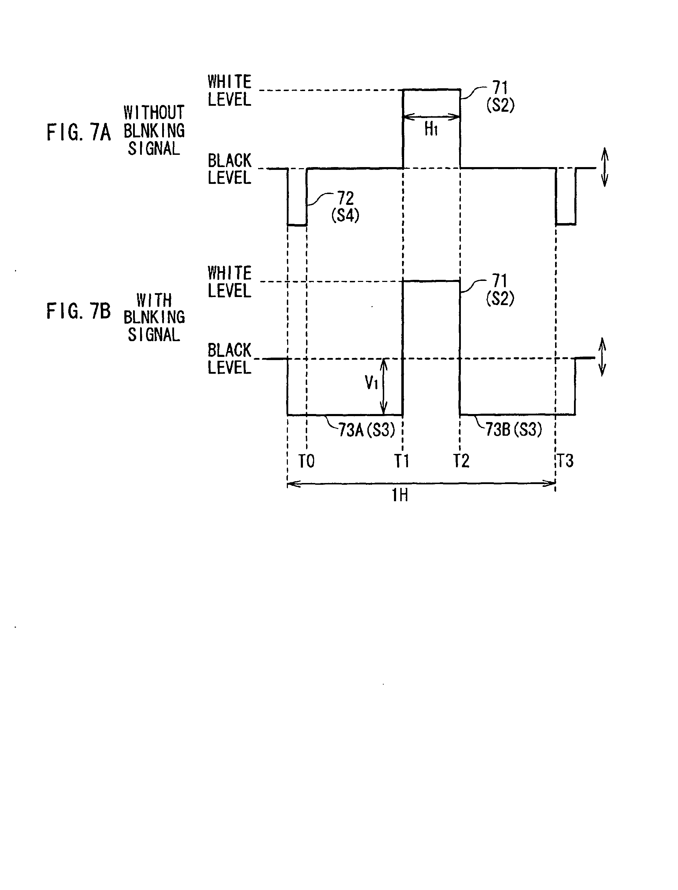

Referring now to Figs. 7A and 7B, the state of the final video image signal in the case where the icon blanking signal S3 is not used at the time of displaying an icon video image and that in the case where the icon blanking signal S3 is used will be compared with each other. Each of Figs. 7A and 7B shows a state where the signal of Fig. 6 is applied as the icon display signal S2. In Figs. 7A and 7B, a signal portion designated with reference numeral 72 is a blanking portion obtained by applying the horizontal blanking signal S4. Portions designated with reference numerals 73A and 73B are blanking portions obtained by applying the icon blanking signal S3. The portion designated with reference numeral 71 is a signal portion obtained by applying the icon display signal S2.

In the case where the icon blanking signal S3 is not used (Fig. 7A), the signal level becomes a white level in the period from time T1 to time T2 and the icon pattern 42B in the center emits light. In the other periods from time T0 to T1 and from time T2 to time T3, the signal level is the black level. At this time, in the AC reproduction method, the value of the black level changes according to the level of the whole video image signal. Consequently, in particular, in the state where a dark video image is captured by the video camera 13 in the slave device 2, the value of the black level increases. When, only the icon pattern 42B in the center is allowed to emit light, the other areas enter a black level drift state, and there is the possibility that the icon patterns 42A and 42C emit light dimly.

In contrast, in the case of the cathode ray tube 30 using the icon blanking signal S3 (Fig. 7B), the signal level becomes the white level in the period from time T1 to time T2 like the case of Fig. 7A. However, in the other periods from time T0 to time T1 and from time T2 to time T3, by the function of the icon blanking signal S3, the signal level is lowered to the black level or less. It corresponds to the fact that the depth of the white level becomes deeper only by V₁. Therefore, even when the value of the black level fluctuates because of the AC reproduction method, the black level drift state can be prevented and the other icon patterns 42A and 42C are prevented from emitting light dimly.

As described above, according to the embodiment, at the time of displaying an icon video image in the icon display area 11B, the icon blanking signal S3 is generated and the level of the signal portions corresponding to the phosphor patterns other than the desired phosphor pattern in the video signal is lowered to be less than the black level. Consequently, while employing the AC reproduction method, an unnatural operation such that the phosphor patterns other than the desired phosphor pattern emit light dimly is suppressed and only the desired phosphor pattern can be made emit light excellently. Thus, erroneous recognition of an icon can be prevented. Moreover, at the time of displaying a video image of the video camera 13 in the main video image display area 11, usually, the advantages of the AC reproduction method can be utilized as they are. Specifically, even in the dark circumstances or in the night, so-called black level drift occurs in an image of the face of a caller, it facilitates to identify the caller. Since the icon blanking signal S3 is generated by inverting the polarity of the icon display signal S2, generation of the icon blanking signal S3 is easy and the circuit configuration can be simplified.

The invention is not limited to the foregoing embodiment but can be variously modified.

For example, in the foregoing embodiment, the reflection-type flat-type cathode ray tube has been described as an example. The invention can be also applied to a transmission-type flat-type cathode ray tube. In the transmission-type flat-type cathode ray tube, a video image is displayed via a screen panel from the side opposite to that of the reflection-type flat-type cathode ray tube, that is, from the screen panel side on which the phosphor layer 34 is provided. In the case of using the transmission-type flat-type cathode ray tube, in the structure of the flat-type cathode ray tube 30 shown in Fig. 2, in place of a not-shown reflection film, a transparent conductive film (for example, a conductive film made of ITO (Indium-Tin Oxide)) is provided on the inner wall face of the screen panel 31, and the phosphor layer 34 is formed on the transparent conductive film. In the case of the transmission-type flat-type cathode ray tube, a video image is observed from the side opposite to that of the front panel 32 (from the screen panel side), so that a back panel is provided in place of the front panel 32. On the inner wall face of the back panel, a conductive film is formed on almost the whole face so as to face the phosphor face, and an anode voltage is applied to the conductive film.

The invention can be applied not only to the flat-type cathode ray tube but also a so-called straight-type cathode ray tube such that the center of a phosphor screen is vertically irradiated with an electron beam from an electron gun.

Further, the invention can be widely applied not only to the door phone apparatus but also apparatuses each having a display for displaying a main video image in monochrome. For example, the invention can be applied to various monitor apparatuses such as a portable TV monitor.

Although the example in which the icon display area 11B is provided below the main video display area 11A has been described in the foregoing embodiment, the icon display area 11B may be provided in another area. Specifically, the icon display area 11B may be provided on the upper, left, or right side of the main video image display area 11A. The icon display area 11B may be also provided in two or more areas.

As described above, in the cathode ray tube of the invention, at the time of displaying another video image in the second video image display portion, the display signal is generated by the first signal generating means, the blanking signal is generated by the second signal generating means, and the signal level of the signal portion corresponding to a phosphor pattern other than the desired phosphor pattern is set to be lower than the black level. With the configuration, in the cathode ray tube capable of displaying a monochromatic image and, in part, a color video image by a phosphor pattern of a predetermined shape in the AC reproduction method, light emission of phosphor patterns other than the desired phosphor pattern is suppressed and only the desired phosphor pattern can be made emit light excellently.

Particularly, in the cathode ray tube according to an aspect of the invention, in the cathode ray tube of the invention, the blanking signal is generated by inverting the polarity of the display signal. Thus, generation of the blanking signal is facilitated and the circuit configuration can be simplified.
Obviously many modifications and variations of the present invention are possible in the light of the above teachings. It is therefore to be understood that within the scope of the appended claims the invention may be practiced otherwise than as specifically described.

## Claims

1. A cathode ray tube for displaying a main video image in monotone by an AC reproduction method, comprising:
an electron gun for emitting an electron beam;
a first video image display portion having a phosphor which emits light in monotone according to scan with an electron beam, and displaying a main video image by light emission of the phosphor;
a second video image display portion in which phosphor patterns each having a predetermined shape are provided in a plurality of positions in an area different from the area where the phosphor is provided, and at least one video image different from the main video image is displayed in a color different from that of the main video image by light emission of the phosphor pattern;
first signal generating means for generating a display signal for making a desired phosphor pattern among the phosphor patterns provided in the plurality of positions emit light; and
second signal generating means for generating a blanking signal for decreasing a level of a signal portion to be below the black level, the signal portion corresponding to a phosphor pattern other than the desired phosphor pattern in the display signal.

2. A cathode ray tube according to claim 1, wherein the second signal generating means generates the blanking signal by inverting polarity of the display signal.

3. A cathode ray tube according to claim 2 applied to a display unit provided in a master device in a door phone apparatus comprising a slave device having an image pickup device and the master device having the display unit capable of displaying a video image captured by the image pickup device,
wherein the video image captured by the image pickup device is displayed in the first video image display portion.

## Amended claims

### Amended claims under Art. 19.1 PCT

**1.** (amended) A cathode ray tube for displaying a main video image in monotone by an AC reproduction method in which a value of a black level fluctuates according to a video image signal, comprising:
an electron gun for emitting an electron beam;
a first video image display portion having a phosphor which emits light in monotone according to scan with an electron beam, and displaying a main video image by light emission of the phosphor;
a second video image display portion having a plurality of phosphor patterns of a color different from that of the first video image display portion, and displaying another video image by light emission of the phosphor pattern;
first signal generating means for generating a display signal for making a desired phosphor pattern among the plurality of phosphor patterns emit light; and
second signal generating means for generating a blanking signal for decreasing a level of a signal portion to be below the black level, the signal portion corresponding to a phosphor pattern other than the desired phosphor pattern in the display signal.

**2.** A cathode ray tube according to claim 1, wherein the second signal generating means generates the blanking signal by inverting polarity of the display signal.

**3.** A cathode ray tube according to claim 2 applied to a display unit provided in a master device in a door phone apparatus comprising a slave device having an image pickup device and the master device having the display unit capable of displaying a video image captured by the image pickup device,
wherein the video image captured by the image pickup device is displayed in the first video image display portion.
